# EUROPÄISCHE PATENTSCHRIFT

(11) **EP 2 089 468 B1**
(45) Veröffentlichungstag und Bekanntmachung des Hinweises auf die Patenterteilung: **27.11.2013**
(21) Anmeldenummer: 07817582.5
(22) Anmeldetag: 26.09.2007
(51) Int. Cl.: C08L 1/02, D01F 1/10, C08B 1/00, D01F 2/00

(54) **VERFAHREN ZUR HERSTELLUNG VON FUNKTIONELLEN CELLULOSISCHEN FORMKÖRPERN**
METHOD FOR THE PRODUCTION OF FUNCTIONAL MOLDED CELLULOSE ARTICLES
PROCÉDÉ DE FABRICATION DE CORPS MOULÉS FONCTIONNELS EN CELLULOSE

(30) Priorität: 28.09.2006 DE 102006046358
(43) Veröffentlichungstag der Anmeldung: 19.08.2009
(73) Patentinhaber: Ostthüringische Materialprüfgesellschaft für Textil und Kunststoffe mbH, 07407 Rudolstadt (DE)
(72) Erfinder: MELLE, Jürgen, 07407 Rudolstadt (DE); KOLBE, Axel, 07924 Neuendorf bei Schleiz (DE); MARKWITZ, Hardy, 07407 Rudolstadt (DE); MOOZ, Michael, 07318 Volkmannsdorf (DE)
(74) Vertreter: Plate, Jürgen
(86) Internationale Anmeldenummer: PCT/DE2007/001740
(87) Internationale Veröffentlichungsnummer: WO 2008/040320

(56) Entgegenhaltungen:
- EP-A- 0 529 396
- EP-A- 1 174 036
- EP-A- 1 449 852
- EP-A1- 1 862 509
- WO-A-99/31141
- WO-A1-2007/130201
- AT-B- 267 068
- DE-A1- 19 849 185
- US-A- 3 388 083
- US-A1- 2005 051 054
- US-A1- 2009 065 107
- US-B1- 6 599 999
- Römpp: Talk
- Römpp: Nano

## Beschreibung

Die Erfindung betrifft ein Verfahren zur Herstellung von cellulosischen Formkörpern mit Einschlüssen mindestens einer unpolaren organischen Verbindung nach dem Trocken-Nass-Extrusionsverfahren (Lyocell-Verfahren), die damit hergestellten cellulosischen Formkörper sowie deren Verwendung.

Es ist bekannt, dass die Wärmespeicherkapazität von textilen Fasern und Formkörpern erhöht werden kann, wenn das formgebende Polymer mit einem organischen Phasenwechselmaterial kombiniert wird, das durch Schmelz/- Erstarrungsübergang, Konformationsübergang oder Entorientierung/Kristallisation Energie mit der Umgebung austauschen kann. Die Höhe des Energieaustauschs und der wirksame Temperaturbereich korrelieren mit der chemischen Struktur, der Änderung der physikalischen Enthalpie und der Konzentration des Phasenwechselmaterials. Entscheidend ist in erster Linie, dass der Energieaustauscheffekt in der Faser durch die molekulare Nahorientierung des Phasenwechselmaterials in oder auf dem Formkörper erhalten bleibt. Bekannt sind folgende Lösungen:

In erster Linie werden Phasenwechselmaterialien mit einer organischen Polymerschicht verkapselt und anschließend die Kapseln in eine Polymerfaser ein- oder auf ein Gewebe aufgebracht (z. B. EP 1 658 395 = US 2006/0279017). Mikroverkapselte Phasenwechselmaterialien werden auch in den Beispielen gemäß der WO 2005/017247 bei der Herstellung von Cellulosefasern mit thermoregulativen Eigenschaften nach dem Lyocell-Verfahren eingesetzt. Als nachteilig erweist sich dabei, dass die Verkapselung des Phasenwechselmaterials von der Formgebung, bzw. von der Verarbeitung getrennt erfolgt. Zwangsläufig ist ein Kompromiss zwischen verfügbaren Kapselchargen hinsichtlich Material und Eignung für das Formgebungsverfahren erforderlich. Bei Trocken-Nass-Extrusionsverfahren werden an Mikrokapseln unter anderem Anforderungen wie Feinheit und Korngrößenverteilung, mechanische und chemische Stabilität, Eignung des Phasenwechselmaterials für das Einsatzgebiet, Verfügbarkeit und Preis, gestellt.

Weiterhin können Phasenwechselmaterialien in eine Polyolefinmatrix oder eine Polymersuspension eingearbeitet werden. Bekannt ist beispielsweise die Herstellung von schmelzegesponnenen Polyolefinfasern, die Phasenwechselmaterialien mit einem Schmelzpunkt von 15 bis 65 °C enthalten (US 5 885 475).

Das direkte Einarbeiten eines Phasenwechselmaterials (z.B. eines Polyethylenglykols) in eine Hohlfaser ist in der US 4 908 238 beschrieben. Hier wurde jedoch auf eine Stabilisierung des Phasenwechselmaterials im Formkörper verzichtet. Von der Struktur her ähnelt es einer Mikrosandwich-Konstruktion. Einfache Sandwichstrukturen sind z.B. in der US 2003/124278 offenbart.

Gemäß einer besonderen Ausführungsform der WO 03/027365 (= EP 1 430169) soll es möglich sein, das PCM bei der Herstellung einer Cellulosefaser in Rohform einzumischen. Dabei kann jedoch keine permanente Bindung des PCMs zum Matrixmaterial (Cellulose) entstehen, und es ist auch nicht möglich, aus einer Mischung von PCM und gelöster Cellulose eine Faser zu erspinnen.

Es besteht ein Interesse, Wirkstoffe aus einem Gewebe oder einer Cellulosefaser freizusetzen. Es ist auch bekannt, verkapselte, Wirkstoff enthaltende Materialien an der Oberfläche von Fasern zu verankern (WO 01/73188) oder sie darin einzubringen (WO 2006/066291). Die Möglichkeit, Riechstoffe und Wirkstoffe als Mikrokapseln herzustellen, ist z.B. in der EP 1 243 326 beschrieben. Wiederum erweist sich die Mikrokapsel durch die begrenzte Verfügbarkeit als Nachteil für eine großtechnische Anwendung, da die Verkapselung separat von der Formgebung erfolgt.

Aus der Literatur sind keine Ansätze bekannt, wie sich die Erzeugung von permanenten unpolaren organischen Mikroeinschlüssen in ein hydrophiles netzwerkbildendes Polymer, wie Cellulose, durch Zugabe der Rohstoffe (Lösungsmittel, Cellulose, unpolare organische Verbindungen und Gemische, Verdickungsmittel und Phasenvermittler) zur Spinnlösung und anschließender Formgebung in einem Verfahren realisieren ließe. Bisher wurde auch nicht beschrieben, dass organische Verbindungen, die in den unpolaren organischen Verbindungen und Gemischen gelöst oder suspendiert werden können, als Modifikatoren (Veränderung des Schmelzbereichs von Phasenwechselmaterialien durch z.B. Schmelzpunkterniedrigung) oder freisetzbare Wirkstoffe genutzt werden können, wenn sie als permanente, unpolare organische Mikroeinschlüsse in ein hydrophiles netzwerkbildendes Polymer, wie Cellulose, eingebracht werden würden.

Bekannt war lediglich der Einbau von nanoskaligen Wirkstoffen in Pulverform bzw. von Carbon-Nanotubes (WO 2004/081267). Eine Lehre in Bezug auf die Einarbeitung von lipophilen Substanzen in eine polare Celluloselösung kann daraus nicht abgeleitet werden.

Ausgehend von einem Stand der Technik, wie er in der WO 2006/066291 dargestellt ist, lag der Erfindung dementsprechend die Aufgabe zugrunde, ein direktes Verfahren zur Herstellung von cellulosischen Formkörpern mit Einschlüssen unpolarer organischer Verbindungen und Gemischen unter Nutzung der in-situ Kapselung dieser organischen, unpolaren Verbindungen und Gemische zu entwickeln.

Eine weitere Aufgabe war es, den Wirkbereich von eingebrachten Phasenwechselmaterialien regelbar zu gestalten. Die erhaltenen cellulosischen Fasern sollten unter anderem eine deutlich erhöhte Wärmespeicherkapazität gegenüber unmodifizierten cellulosischen Fasern aufweisen, ohne vorgefertigte Kapseln oder ein Phasenwechselmaterial in Schichtstrukturen zu verwenden.

Außerdem war es Aufgabe der Erfindung, ein Verfahren zu entwickeln, nach dem auch unpolare Wirkstoffe in cellulosischen Formkörpern gelöst und/oder gespeichert und kontrolliert über einen längeren Zeitraum an die Umgebung abgegeben werden können.

Diese Aufgaben werden erfindungsgemäß dadurch gelöst, dass man eine cellulosische Form- und Spinnlösung, die durch Lösen von Cellulose in tertiärem Aminoxid, vorzugsweise N-Methylmorpholin-N-oxid, und einem Nichtlösungsmittel, vorzugsweise Wasser, hergestellt werden kann, mit einem unpolaren organischen Material versetzt, die Viskosität des unpolaren Materials erhöht, damit es sich in der wasserhaltigen Cellulose/Aminoxid-Lösung emulgieren läßt, und die dispergierte Phase mit einer Schicht aus flächigen Nanopartikeln umgibt.

Gegenstand der Erfindung ist demgemäß ein Verfahren zur Herstellung von cellulosischen Formkörpern mit Einschlüssen mindestens einer unpolaren organischen Verbindung nach dem Lyocell-Verfahren, das dadurch gekennzeichnet ist, dass eine Emulsion mit mindestens einer unpolaren organischen Verbindung in einer Lösung von Cellulose in N-Methylmorpholin-N-oxid hergestellt und durch Zugabe von hydrophoben Verdickungsmitteln stabilisiert wird, dass der Emulsion nanoskalige, flächige, hydrophobierte Partikel zugesetzt werden, die die Tröpfchen der unpolaren organischen Verbindung umhüllen, und dass die Suspension geformt und die Cellulose rekristallisiertwird, wodurch Formkörper mit einer Cellulosematrix erhalten werden, in der die unpolare organische Verbindung dispers eingelagert ist.

Die unpolare organische Verbindung ist bevorzugt ein Kohlenwasserstoff, ein Wachs, Bienenwachs, ein Öl, eine Fettsäure, ein Fettsäureester, Stearinanhydrid, ein langkettiger Alkohol oder eine beliebige Mischung davon. Sie hat allgemein einen Schmelzpunkt von weniger als 100 °C und bevorzugt einen Schmelzpunkt im Bereich von 0 bis 40 °C. Das gilt auch für die Mischungen.

Als hydrophobes Verdickungsmittel wird bevorzugt eine hydrophobierte nanoskalige pyrogene Kieselsäure genutzt. Es erhöht die Viskosität der unpolaren organischen Verbindung(en) so weit, dass sie in der cellulosischen Form- und Spinnlösung emulgiert werden können. Überraschenderweise reicht dafür ein Anteil an Verdickungsmittel von 1 bis 50 Gew.-%, bevorzugt von 5 bis 20 Gew.-%, aus, bezogen auf das Gewicht der Cellulose, um die im Vergleich zu Kohlenwasserstoff-in-Wasser-Emulsionen viel größeren Dichte- und Viskositätsunterschiede einer Emulsion von Kohlenwasserstoffen in einer cellulosischen Form- und Spinnlösung zu überbrücken. Die nanoskalige pyrogene Kieselsäure besteht allgemein aus Partikeln mit einem mittleren Durchmesser von 30 bis 200 nm, bevorzugt von 40 bis 100 nm.

Für das erfindungsgemäße Verfahren geeignete hydrophobierte, nanoskalige, pyrogene Kieselsäuren sind bekannt. Im Stand der Technik dienen sie zur Verdickung von Lösungen (EP 0 745 372) sowie der Stabilisierung von Wasserin-Öl oder Öl-in-Wasser-Emulsionen gegen Separation der dispersen Phase durch Anlagerung der pyrogenen Kieselsäure an der Grenzfläche Öl/Wasser (DE 10 2004 014 704). Sie können für "controlled release"-Systeme verwendet werden.

Die nanoskaligen, flächigen, hydrophobierten Partikel werden allgemein ebenfalls in einem Anteil von 1 bis 50 Gew.-%, bevorzugt von 2 bis 20 Gew.-%, besonders bevorzugt von 5 bis 12 Gew.-%, jeweils bezogen auf das Gewicht der Cellulose, eingesetzt. Vorzugsweise handelt es sich dabei um modifizierte Schichtsilikate, z.B. hydrophobiertes Bentonit. Sie umgeben die organischen Materialmikrophasen mit einer Schicht nanodisperser Strukturen. Die Partikel haben die überraschende Eigenschaft, dass sie die Emulsion während der Formgebung stabilisieren und anschließend als Phasenvermittler zwischen Cellulosematrix und eingeschlossenem unpolaren organischen Verbindungen fungieren. Die Partikel haben allgemein eine Länge und Breite von etwa 200 bis 1.000 nm und eine Dicke von etwa 1 bis 4 nm. Das Verhältnis von Länge und Breite zu Dicke (aspect ratio) beträgt vorzugsweise etwa 150 bis 1.000, bevorzugt von 200 bis 500.

Die eingeschlossenen unpolaren organischen Verbindungen lassen sich auch mit Wirkstoffen beladen. Dabei handelt es sich um unpolare Wirkstoffe, die mit den unpolaren organischen Verbindungen Lösungen oder Suspensionen bilden. Bei den Wirkstoffen handelt es sich bevorzugt um Pflanzenprodukte, wie Jojobaöl, Monoi-Öl, Nachtkerzen-Öl, Avocado-Öl, Kakaobutter, ätherische Pflanzenextrakte oder unpolare Pflanzenauszüge, um fettlösliche Vitamine, wie Vitamin A, D und E, oder um Insektizide, wie Pyrethroide, speziell Permethrin, oder um Repellents. Die Konzentration an Wirkstoff(en) kann von 0,001 g pro kg bis zu 500 g und mehr, bevorzugt von 50 bis 150 g pro kg Formkörper betragen. Die Wirkstoffe können über einen längeren Zeitraum kontrolliert an die Umgebung abgegeben werden. Dieser Effekt läßt sich z.B. mit der Waschpermanenz der Funktionsfaser belegen.

Durch die Zugabe von unpolaren organischen Verbindungen und Gemischen in einer Konzentration kleiner 200 % (w/w), bezogen auf das Gewicht der in der Spinnlösung gelösten Cellulose, entstehen Formkörper mit weniger als 66 % (w/w) an unpolaren organischen Substanzen oder Gemischen.

Das erfindungsgemäße Verfahren führt zu cellulosischen Formkörpern, die gegenüber unmodifizierten Cellulosefasern eine wesentlich gesteigerte Speicherkapazität für Wärme und/oder unpolare Wirksubstanzen aufweisen.

Zusätzlich kann der Schmelzpunkt der Phasenwechselmaterialien durch Abmischen mit anderen organischen Verbindung erniedrigt und damit auf den jeweils gewünschten Wert eingestellt werden. Die unpolaren organischen Verbindung(en) eignen sich ferner als Lösungsmittel und/oder Speichermedium für unpolare organische Wirkstoffe. Aus den Einschlüssen in den cellulosischen Formkörpern können die Wirkstoffe kontrolliert freigesetzt werden. Es kann auch der gegenteilige Effekt genutzt werden, bei dem die Fasern mit den Einschlüssen aus unpolaren organischen Verbindungen gasförmige und/oder flüssige unpolare Verbindungen (Schadstoffe) absorbieren.

Die funktionale Wirkung kann sich dabei auf den physikalischen Effekt der Wärmespeicherung und/oder auf die gleichmäßige und feindosierbare Speicherung und Freisetzung von unpolaren Wirkstoffen und Pflanzenextrakten aus dem Faserinneren beziehen. Durch geeignete Wahl des unpolaren Anteils sind nach diesem Verfahren auch Fasern herstellbar, die als Absorptionsmedium für flüssige oder gasförmige, unpolare Substanzen dienen können.

Mit diesem Verfahren lassen sich cellulosische Formkörper mit den bereits beschriebenen Effekten, wie erhöhte Wärmespeicherkapazität und "controlled-release"-Funktionen, viel effizienter und kostengünstiger herstellen, da Bulkmaterialien verarbeit werden und die konventionelle Kapselung und die Einarbeitung dieser Mikrokapseln entfällt. Das Verfahren gemäß der Erfindung ist variabel. So kann z.B. die Schmelzpunkterniedrigung von Gemischen genutzt werden, um ein industrielles Standard-Phasenwechselmaterial exakt an eine Anwendungstemperatur anzupassen bzw. den Schmelz-/Erstarrungsbereich zu verbreitern.

Die nach dem erfindungsgemäßen Verfahren hergestellten Formkörper sind neu und ebenfalls Teil der vorliegenden Erfindung. Sie lassen sich (insbesondere in Form von Fasern) zu Textilien verarbeiten, die nicht nur allgemein in der Bekleidungsindustrie, sondern auch in Technischen Textilien und im Freizeitbereich Anwendung finden. Speziell die mit unpolaren Wirkstoffen versehenen Formkörper können auch für medizinische oder kosmetische Zwecke eingesetzt werden. Die Formkörper können ferner zur Herstellung von Spezialpapieren oder von Folien dienen, die mit (übertragbaren) Wirkstoffen beladen sind.

Die erfindungsgemäßen cellulosischen Formkörper umfassen eine Cellulosematrix und darin dispergierte Einschlüsse, wobei die Einschlüsse eine oder mehrere mit einem hydrophoben Verdickungsmittel stabilisierte unpolare organische Verbindungen enthalten.

Die unpolaren organischen Verbindungen sind ausgewählt aus der Gruppe, umfassend Kohlenwasserstoffe, Wachse, Bienenwachse, Öle, Fettsäuren, Fettsäureester, Stearinanhydride und langkettige Alkohole, die jeweils einen Schmelzpunkt von weniger als 100 °C aufweisen. Der Anteil der unpolaren organischen Verbindungen beträgt mehr als 10 Gew.-%, bevorzugt mehr als 30 Gew.-%, und besonders bevorzugt mehr als 40 Gew.-%, bezogen auf das Gewicht der Cellulose.

Das hydrophobe Verdickungsmittel besteht aus nanoskaligen Partikeln, bevorzugt aus hydrophobierter nanoskaliger pyrogener Kieselsäure, und ist in einer Menge von 1 bis 50 Gew.-%, bezogen auf das Gewicht der Cellulose, enthalten.

Die Einschlüsse können zudem einen oder mehrere Wirkstoffe aus der Gruppe, umfassend Pflanzenprodukte, Jojobaöl, Monoi-Öl, Nachtkerzen-Öl, Avocado-Öl, Kakaobutter, ätherische Pflanzenextrakte, unpolare Pflanzenauszüge, fettlösliche Vitamine, Vitamin A, D und E, Insektizide, Pyrethroide, Permethrin und Repellents, enthalten. Die Wirkstoffe sind in einer Menge von bis zu 50 Gew.-%, bezogen auf das Gewicht des cellulosischen Formkörpers, enthalten.

In einer besonderen Ausführungsform enthält der cellulosische Formkörper ein Barrierematerial aus nanoskaligen schichtförmigen Partikeln, mittels welcher die unpolaren organischen Verbindungen in den Einschlüssen zurückgehalten und Wirkstoffe in kontrollierter Weise freigesetzt werden. Der Anteil des Barrierematerials beträgt 1 bis 50 Gew.-%, bezogen auf das Gewicht der Cellulose.

Weitere erfindungsgemäße Ausgestaltungen betreffend das Barrierematerial sind den Ansprüchen 23 bis 27 zu entnehmen.

In weiteren Ausführungsformen weist der cellulosische Formköper in einem Temperaturbereich von 15 bis 45 °C eine spezifische latente Wärme von größer 20 J/g, bevorzugt von größer 30 J/g und besonders bevorzugt von größer 50 J/g auf.

Bei einer erfindungsgemäßen Faser beträgt der Verlust einer oder mehrerer unpolarer organischer Verbindungen nach 20 Wäschen weniger als 20 Gew.-%, bezogen auf die ursprünglich in der Faser enthaltene Menge der jeweiligen organischen Verbindung (bestimmt gemäß DIN EN 26330 von 1993).

Im folgenden wird die Erfindung anhand von zwei schematischen Figuren näher erläutert.

Es zeigen:
Fig. 1 eine erfindungsgemäß hergestellte cellulosische Faser, und
Fig. 2 eine Detailansicht eines Einschlusses in der Faser.

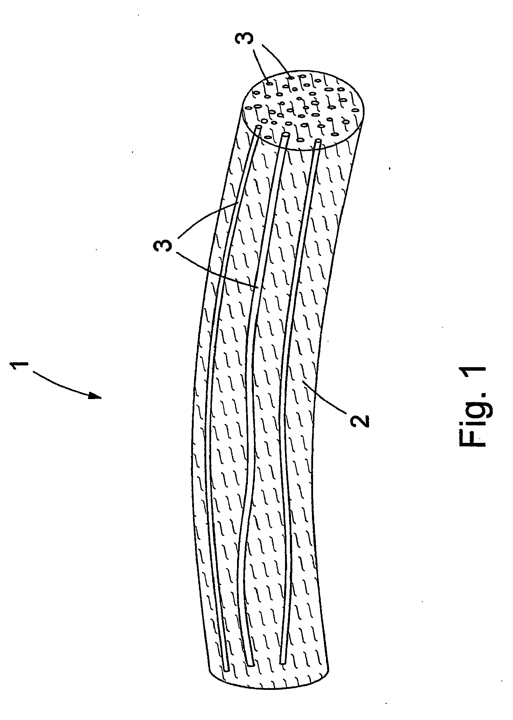

In Fig. 1 ist eine erfindungsgemäß hergestellte Faser 1 mit Cellulosematrix 2 und darin dispergierten Einschlüssen 3 dargestellt. Die Einschlüsse 3 enthalten eine oder mehrere unpolare organische Verbindungen, die mit einem hydrophoben Verdickungsmittel stabilisiert sind.

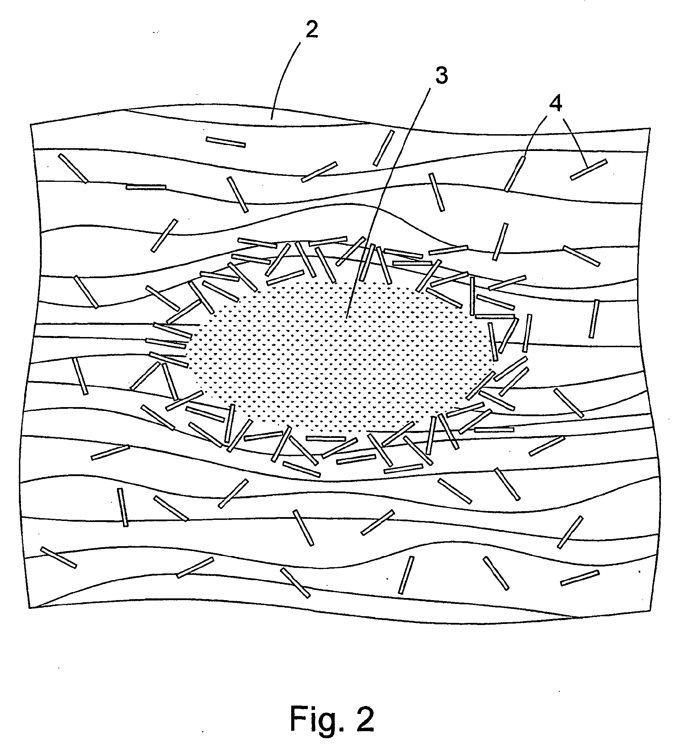

Details der Einschlüsse 3 und der sie umgebenden Cellulosematrix sind in Fig. 2 in schematischer Weise illustriert. In der Cellulosematrix 2 ist ein Barrierematerial 4 aus nanoskaligen schichtförmigen Partikeln dispergiert. Insbesondere liegen die schichtförmigen Partikel separat bzw. exfoliert in der Cellulosematrix 2 vor. Um die Einschlüsse 3 herum ist die Dichte des Barrierematerials 4 gegenüber seiner mittleren Dichte in der Cellulosematrix 2 erhöht. Dementsprechend sind die Einschlüsse 3 von einer barriereartigen Zone umgeben, durch welche die unpolaren organischen Verbindungen und ggf. darin enthaltene Wirkstoffe nicht bzw. nur auf verschlungenen Pfaden ("tortuous path") in die Cellulosematrix 2 permeieren können. Durch geeignete Wahl und Dosierung des Barrierematerials 4 kann die Permeabilität für Wirkstoffe in gezielter Weise eingestellt werden ("controlled release system").

Die nachfolgenden Beispiele sollen die Erfindung illustrieren. Prozente sind darin Gewichtsprozente, soweit nicht anders angegeben oder aus dem Zusammenhang unmittelbar ersichtlich.

### Beispiel 1

15.759 g einer 60%-igen wäßrigen Lösung von N-Methylmorpholin-N-oxid wurden mit 1160 g Zellstoff mit einem Durchschnittspolymerisationsgrad (DP) von 500 unter Zusatz von 6,8 g Propylgallat in ein Lösegefäß mit Rührwerk von 37 l Volumen eingebracht. Das Lösegefäß wurde bis auf 20 mbar evakuiert und im Verlauf von 6 Stunden von 2°C auf 94 °C bei einer Rührerdrehzahl von 18 min⁻¹ erwärmt und das verdampfende Wasser in einem angeschlossenen Kühler kondensiert. Kurz vor Abschluß des Lösevorgangs wurden 350 g Paraffin RT 27 (Schmelzpunkt: 28 °C; erhältlich von Rubitherm Technologies GmbH, Berlin) zugegeben. Anschließend wurden 116 g nanoskalige, pyrogene Kieselsäure eingearbeitet und eine Emulsion von Paraffin in der Spinnlösung gebildet. Nach Zugabe und Verteilung von 116 g hydrophobiertem Bentonit wurde das Gemisch durch eine Spinndüse über einen Luftspalt in ein wäßriges Fällbad gesponnen. Die Fasern wiesen ein erhöhtes Wärmeaufnahmevermögen von ca. 80 J/g gegenüber 7 J/g bei unmodifizierten Fasern auf.

### Beispiel 2

Beispiel 1 wurde wiederholt mit der einzigen Abweichung, dass anstelle von reinem Paraffin 350 g einer Mischung von Paraffin RT 27 und Cyclohexan eingesetzt wurde, wobei der Anteil an Cyclohexan 10 % betrug, bezogen auf das Gewicht der Mischung.

Die Fasern wiesen gegenüber dem in Beispiel 1 beschriebenen Wärmetauschverhalten ein um 4 °C abgesenktes Schmelzmaximum auf. Dieses läßt sich mit einer Schmelzpunkterniedrigung erklären, die nachfolgend beschrieben ist.

### Schmelzpunkterniedrigung von Paraffin

1. Probe 10 % Cyclohexan in Paraffin: Einwaage von 9 g Paraffin RT 27. Danach Aufschmelzen des Paraffins und Dotierung mit 1 g Cyclohexan.

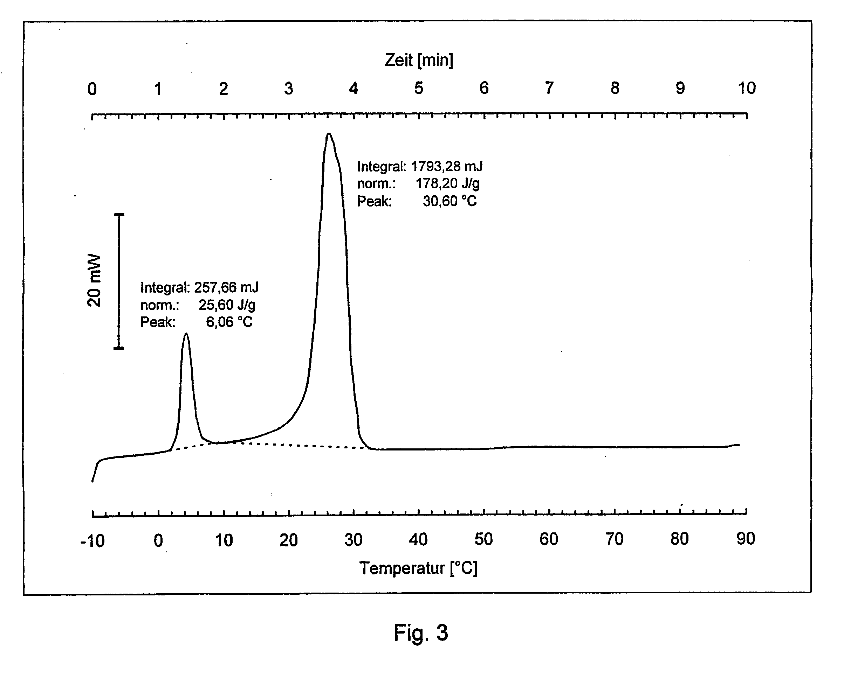

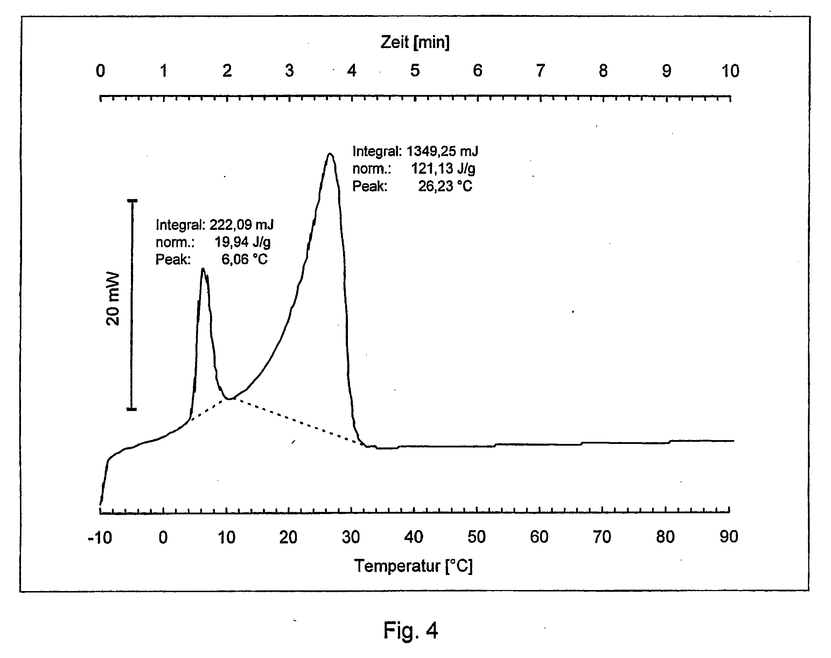

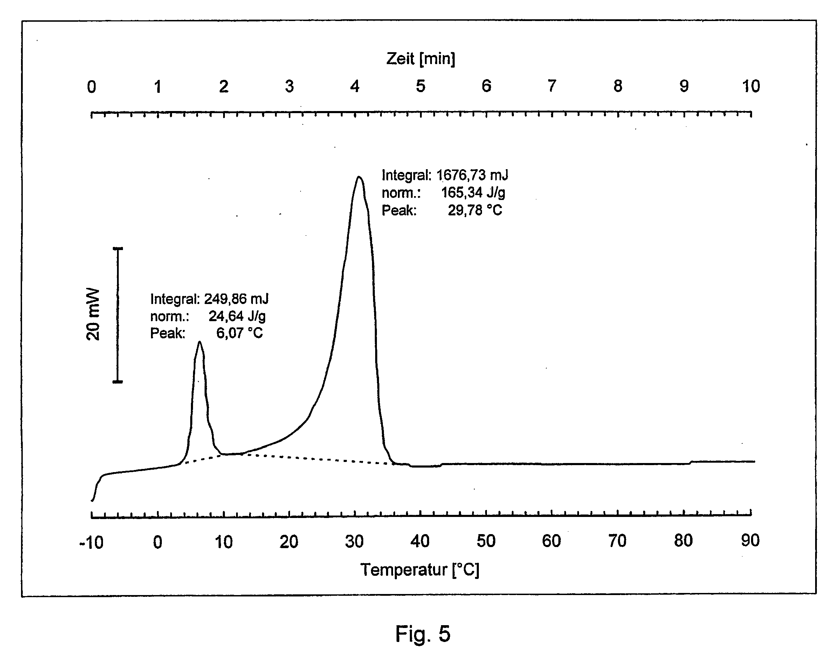

Anschließend DSC-Messung; Probengewicht 11,1390 mg (Fig. 4).
2. Probe 5 % Cyclohexan in Paraffin: Einwaage von 9,5 g Paraffin RT 27. Danach Aufschmelzen des Paraffins und Dotierung mit 0,5 g Cyclohexan. Anschließend DSC-Messung; Probengewicht 10,1410 mg (Fig. 5).
3. DSC-Messung an reinem RT 27 als Vergleich; Probengewicht 10,0630 mg (Fig. 3)

| Probe | 1. Schmelzpeak bei | 2. Schmelzpeak bei |
|---|---|---|
| RT 27 | 6,06 °C | 30,60 °C |
| RT 27 + 5 % Cyclohexan | 6,07 °C | 29,78 °C |
| RT 27 + 10 % Cyclohexan | 6,06 °C | 26,23 °C |

### Beispiel 3

Beispiel 1 wurde wiederholt, wobei anstelle von reinem Paraffin 350 g einer Mischung aus Paraffin RT 27 und Permethrin (Anteil an Permethrin: 10 %, bezogen auf das Gewicht der Mischung) zugegeben wurden.

Die erhaltene Faser entfaltete eine permanent insektizide Wirkung und war waschbar, wobei der mit Toluol extrahierbare Wirkstoffanteil nach 10 Wäschen höher war als bei einer ungewaschenen Faser.

### Beispiel 4

Beispiel 1 wurde wiederholt mit der Abwandlung, dass eine Mischung aus 175 g Paraffin RT 27 und 175 g Jojobaöl (ein natürliches Wachs) zugegeben wurde.

Das Gemisch wurde, wie im Beispiel 1 beschrieben, ausgesponnen.

Die erhaltene Faser wies ein waschpermanentes Depot an Jojobaöl auf und kann in kosmetischen Produkten verarbeitet werden.

### Beispiel 5

Beispiel 1 wurde wiederholt mit der Abwandlung, dass anstelle von Paraffin 350 g eines Alkangemisches mit einem Schmelzmaximum von 18 °C zugegeben wurde. Das Gemisch wurde, wie im Beispiel 1 beschrieben, ausgesponnen.

Das Material wies ein Depot eines unpolaren Lösungsmittels auf, das unter Tragebedingungen flüssig und in der Lage ist, migrationsfähige unpolare organische Verbindungen aufzunehmen.

## Patentansprüche

1. Verfahren zur Herstellung von cellulosischen Formkörpern mit Einschlüssen mindestens einer unpolaren organischen Verbindung nach dem Lyocell-Verfahren, **dadurch gekennzeichnet, dass**
- eine Emulsion mit mindestens einer unpolaren organischen Verbindung in einer Lösung von Cellulose in N-Methylmorpholin-N-oxid hergestellt und durch Zugabe von hydrophoben Verdickungsmitteln stabilisiert wird,
- der Emulsion nanoskalige, flächige, hydrophobierte Partikel zugesetzt werden, die die tröpfchenartigen Einschlüsse der unpolaren organischen Verbindung umgeben, und
- dadurch eine Suspension gebildet wird, und
- die Cellulose rekristallisiert wird, wodurch Formkörper mit einer Cellulosematrix erhalten werden, in der die unpolare organische Verbindung dispers eingelagert ist.

2. Verfahren nach Anspruch 1, **dadurch gekennzeichnet, dass** als hydrophobes Verdickungsmittel eine nanoskalig strukturierte, pyrogene Kieselsäure verwendet wird.

3. Verfahren nach Anspruch 2, **dadurch gekennzeichnet, dass** das Verdickungsmittel in einem Anteil von 1 bis 50 Gew.-%, bezogen auf das Gewicht der Cellulose, eingesetzt wird.

4. Verfahren nach Anspruch 1, **dadurch gekennzeichnet, dass** als nanoskalige, flächige, hydrophobierte Partikel modifizierte Schichtsilikate, bevorzugt hydrophobierte Bentonite, eingesetzt werden.

5. Verfahren nach Anspruch 1, **dadurch gekennzeichnet, dass** die nanoskaligen, flächigen hydrophobierten Partikel in einem Anteil von 1 bis 50 Gew.-%, bezogen auf das Gewicht der Cellulose, eingesetzt werden.

6. Verfahren nach Anspruch 1, **dadurch gekennzeichnet, dass** als unpolare organische Verbindungen Kohlenwasserstoffe, Wachse, Bienenwachse, Öle, Fettsäuren, Fettsäureester, Stearinanhydride, langkettige Alkohole oder Mischungen davon, jeweils mit einem Schmelzpunkt von weniger als 100 °C, eingesetzt werden, die vorzugsweise mit anderen organischen Substanzen, die deren Schmelzpunkt erniedrigen, abgemischt werden.

7. Verfahren nach Anspruch 1, **dadurch gekennzeichnet, dass** die Einschlüsse der unpolaren organischen Verbindung(en) aus Lösungen oder Suspensionen von Wirkstoffen in unpolaren organischen Lösungsmitteln erzeugt werden.

8. Verfahren nach Anspruch 7, **dadurch gekennzeichnet, dass** unpolare Wirkstoffe, bevorzugt Pflanzenprodukte, besonders bevorzugt Jojobaöl, Monoi-Öl, Nachtkerzen-Öl, Avocado-Öl, Kakaobutter, ätherische Pflanzenextrakte oder unpolare Pflanzenauszüge, fettlösliche Vitamine, bevorzugt Vitamin A, D und E, oder Insektizide, bevorzugt Pyrethroide, besonders bevorzugt Permethrin, oder Repellents, eingesetzt werden, wobei die Konzentration an Wirkstoff(en) vorzugsweise 0,001 bis 500 g und mehr pro kg Formkörper beträgt.

9. Cellulosischer Formkörper, hergestellt nach dem Lyocell-Verfahren, miteiner Cellulosematrix und darin dispergierten Einschlüssen, **dadurch gekennzeichnet, daß** die Einschlüsse eine oder mehrere mit einem hydrophoben Verdickungsmittel stabilisierte unpolare organische Verbindungen enthalten, und dass der Formkörper ein Barrierematerial aus nanoskaligen schichtförmigen Partikeln enthält.

10. Cellulosischer Formkörper nach Anspruch 9, **dadurch gekennzeichnet, dass** die unpolaren organischen Verbindungen ausgewählt sind aus der Gruppe, umfassend Kohlenwasserstoffe, Wachse, Bienenwachse, Öle, Fettsäuren, Fettsäureester, Stearinanhydride und langkettige Alkohole, die jeweils einen Schmelzpunkt von weniger als 100 °C aufweisen.

11. Cellulosischer Formkörper nach Anspruch 9, **dadurch gekennzeichnet, dass** die Einschlüsse einen oder mehrere Wirkstoffe aus der Gruppe, umfassend Pflanzenprodukte, Jojobaöl, Monoi-Öl, Nachtkerzen-Öl, Avocado-Öl, Kakaobutter, ätherische Pflanzenextrakte, unpolare Pflanzenauszüge, fettlösliche Vitamine, Vitamin A, D und E, Insektizide, Pyrethroide, besonders bevorzugt Permethrin, und Repellents, enthalten, wobei die Wirkstoffe vorzugsweise in einer Menge von bis zu 50 Gew.-% enthalten sind, bezogen auf das Gewicht des cellulosischen Formkörpers.

12. Cellulosischer Formkörper nach Anspruch 9, **dadurch gekennzeichnet, dass** der Anteil der unpolaren organischen Verbindungen mehr als 10 Gew.-%, bevorzugt mehr als 30 Gew.-%, und besonders bevorzugt mehr als 40 Gew.-%, und/oder der Anteil des hydrophoben Verdickungsmittels 1 bis 50 Gew.-%, jeweils bezogen auf das Gewicht der Cellulose, beträgt.

13. Cellulosischer Formkörper nach Anspruch 9, **dadurch gekennzeichnet, dass** das hydrophobe Verdickungsmittel aus nanoskaligen Partikeln, bevorzugt aus hydrophobierter nanoskaliger pyrogener Kieselsäure besteht.

14. Cellulosischer Formkörper nach Anspruch 9, **dadurch gekennzeichnet, dass** er ein Barrierematerial aus hydrophobierten nanoskaligen schichtförmigen Partikeln zur Rückhaltung der unpolaren organischen Verbindungen und zur kontrollierten Freisetzung der Wirkstoffe enthält, wobei der Anteil des Barrierematerials bevorzugt 1 bis 50 Gew.-% beträgt, bezogen auf das Gewicht der Cellulose.

15. Cellulosischer Formkörper nach Anspruch 14, **dadurch gekennzeichnet, dass** das Barrierematerial aus hydrophobierten nanoskaligen Schichtsilikaten besteht, bevorzugt aus hydrophobiertem nanoskaligem Bentonit.

16. Cellulosischer Formkörper nach Anspruch 14, **dadurch gekennzeichnet, dass** das Barrierematerial in der Cellulosematrix dispergiert ist, wobei die Einschlüsse vorzugsweise von einer Zone mit erhöhter Dichte des Barrierematerials umgeben sind.

17. Cellulosischer Formkörper nach Anspruch 9, **dadurch gekennzeichnet, dass** er eine Faser ist und dass nach einem Test gemäß DIN EN 26330 von 1993 der Verlust einer oder mehrerer unpolarer organischer Verbindungen nach 20 Wäschen weniger als 20 Gew.-% beträgt, bezogen auf die ursprünglich in der Faser enthaltene Menge der jeweiligen organischen Verbindung.

18. Cellulosische Formkörper nach Anspruch 9, **dadurch gekennzeichnet, daß** er in einem Temperaturbereich von 15 bis 45 °C bevorzugt eine spezifische latente Wärme von größer 20 J/g, bevorzugt von größer 30 J/g und besonders bevorzugt von größer 50 J/g aufweist.

19. Cellulosischer Formkörper nach Anspruch 9, **dadurch gekennzeichnet, dass** er nach einem Verfahren gemäß einem oder mehreren der Ansprüche 1 bis 8 hergestellt ist.

20. Verwendung cellulosischer Formkörper nach einem oder mehreren der Ansprüche 9 bis 19 in textilen Flächengebilden, gegebenenfalls unter Abmischung mit anderen textilen Fasern, zur Herstellung von Spezialpapieren, oder zur Herstellung von Folien, insbesondere von Folien, die mit Wirkstoffen beladen sind.

## Claims

1. Process for producing cellulosic shaped articles with inclusions of at least one nonpolar organic compound by the Lyocell process, **characterized in that**
- an emulsion with at least one nonpolar organic compound in a solution of cellulose in N-methylmorpholine N-oxide is prepared and stabilized by adding hydrophobic thickeners,
- nanoscale, sheet-like, hydrophobicized particles are added to the emulsion; these surround the droplet-like inclusions of the nonpolar organic compound, and
- a suspension is formed thereby, and
- the cellulose is recrystallized, giving shaped articles with a cellulose matrix in which the nonpolar organic compound is incorporated in disperse form.

2. Process according to Claim 1, **characterized in that** a nanoscale structured, fumed silica is used as hydrophobic thickener.

3. Process according to Claim 2, **characterized in that** the thickener is used in a fraction of from 1 to 50 % by weight, based on the weight of the cellulose.

4. Process according to Claim 1, **characterized in that** modified sheet silicates, preferably hydrophobicized bentonites, are used as nanoscale, sheet-like, hydrophobicized particles.

5. Process according to Claim 1, **characterized in that** the nanoscale, sheet-like hydrophobicized particles are used in a fraction of from 1 to 50 % by weight, based on the weight of the cellulose.

6. Process according to Claim 1, **characterized in that** hydrocarbons, waxes, beeswaxes, oils, fatty acids, fatty acid esters, stearic anhydrides, long-chain alcohols or mixtures thereof, in each case having a melting point of less than 100 °C, are used as nonpolar organic compounds which are preferably mixed with other organic substances which lower the melting point thereof.

7. Process according to Claim 1, **characterized in that** the inclusions of the nonpolar organic compound(s) are produced from solutions or suspensions of active ingredients in nonpolar organic solvents.

8. Process according to Claim 7, **characterized in that** nonpolar active ingredients, preferably plant products, particularly preferably jojoba oil, manoi oil, evening primrose oil, avocado oil, cocoa butter, ethereal plant extracts or nonpolar plant extracts, fat-soluble vitamins, preferably vitamin A, D and E, or insecticides, preferably pyrethroids, particularly preferably permethrin, or repellents, are used, the concentration of active ingredient(s) preferably being 0.001 to 500 g and more per kg of shaped article.

9. Cellulosic shaped article, produced by the Lyocell process, with a cellulose matrix and, dispersed therein, inclusions, **characterized in that** the inclusions comprise one or more nonpolar organic compounds stabilized with a hydrophobic thickener, and **in that** the shaped article comprises a barrier material made of nanoscale sheet-like particles.

10. Cellulosic shaped article according to Claim 9, **characterized in that** the nonpolar organic compounds are selected from the group comprising hydrocarbons, waxes, beeswaxes, oils, fatty acids, fatty acid esters, stearic anhydrides and long-chain alcohols, which in each case have a melting point of less than 100 °C.

11. Cellulosic shaped article according to Claim 9, **characterized in that** the inclusions contain one or more active ingredients from the group comprising plant products, jojoba oil, manoi oil, evening primrose oil, avocado oil, cocoa butter, ethereal plant extracts, nonpolar plant extracts, fat-soluble vitamins, vitamin A, D and E, insecticides, pyrethroids, particularly preferably permethrin, and repellents, the active ingredients preferably being present in an amount of up to 50 % by weight, based on the weight of the cellulosic shaped article.

12. Cellulosic shaped article according to Claim 9, **characterized in that** the fraction of nonpolar organic compounds is more than 10 % by weight, preferably more than 30 % by weight, and particularly preferably more than 40 % by weight, and/or the fraction of the hydrophobic thickener is 1 to 50 % by weight, in each case based on the weight of the cellulose.

13. Cellulosic shaped article according to Claim 9, **characterized in that** the hydrophobic thickener consists of nanoscale particles, preferably of hydrophobicized nanoscale fumed silica.

14. Cellulosic shaped article according to Claim 9, **characterized in that** it comprises a barrier material made of hydrophobicized nanoscale sheet-like particles for retaining the nonpolar organic compounds and for the controlled release of the active ingredients, the fraction of the barrier material preferably being 1 to 50 % by weight, based on the weight of the cellulose.

15. Cellulosic shaped article according to Claim 14, **characterized in that** the barrier material consists of hydrophobicized nanoscale sheet silicates, preferably of hydrophobicized nanoscale bentonite.

16. Cellulosic shaped article according to Claim 14, **characterized in that** the barrier material is dispersed in the cellulose matrix, the inclusions preferably being surrounded by a zone with increased density of the barrier material.

17. Cellulosic shaped article according to Claim 9, **characterized in that** it is a fiber and **in that**, according to a test in accordance with DIN EN 26330 of 1993, the loss of one or more nonpolar organic compounds after 20 washes is less than 20 % by weight, based on the amount of respective organic compound originally present in the fiber.

18. Cellulosic shaped article according to Claim 9, **characterized in that**, in a temperature range from 15 to 45 °C, it preferably has a specific latent heat of greater than 20 J/g, preferably of greater than 30 J/g and particularly preferably of greater than 50 J/g.

19. Cellulosic shaped article according to Claim 9, **characterized in that** it is prepared by a process according to one or more of Claims 1 to 8.

20. Use of cellulosic shaped articles according to one or more of Claims 9 to 19 in textile sheet materials, optionally with blending with other textile fibers, for producing special papers, or for producing films, in particular films which are laden with active ingredients.

## Revendications

1. Procédé de fabrication de corps façonnés cellulosiques avec des inclusions d'au moins un composé organique non polaire selon le procédé de Lyocell, **caractérisé en ce que** :
- on fabrique une émulsion avec au moins un composé organique non polaire dans une solution de cellulose dans du N-oxyde de N-méthylmorpholine et le tout est stabilisé par addition d'agents épaississants hydrophobes,
- on ajoute à l'émulsion des particules plates hydrophobisées à l'échelle nanométrique, qui entourent les inclusions en forme de goutte du composé organique non polaire, et
- on forme de la sorte une suspension et
- la cellulose est recristallisée, si bien que l'on obtient des corps façonnés avec une matrice cellulosique dans laquelle le composé organique non polaire est noyé en dispersion.

2. Procédé selon la revendication 1, **caractérisé en ce que** l'on utilise comme agent épaississant hydrophobe un acide silicique pyrogène structuré à l'échelle nanométrique.

3. Procédé selon la revendication 2, **caractérisé en ce que** l'agent épaississant est utilisé en fraction de 1 à 50 % en poids par rapport au poids de la cellulose.

4. Procédé selon la revendication 1, **caractérisé en ce que** l'on utilise comme particules plates hydrophobisées à l'échelle nanométrique des silicates stratifiés modifiés, de préférence de la bentonite hydrophobisée.

5. Procédé selon la revendication 1, **caractérisé en ce que** les particules plates hydrophobisées à l'échelle nanométrique sont utilisées en fraction de 1 à 50 % en poids par rapport au poids de la cellulose.

6. Procédé selon la revendication 1, **caractérisé en ce que** l'on utilise comme composés organiques non polaires, des hydrocarbures, des cires, des cires d'abeille, des huiles, des acides gras, des esters d'acides gras, de l'anhydride stéarique, des alcools à longue chaîne ou leurs mélanges, respectivement, avec un point de fusion inférieur à 100 °C, qui sont mélangés de préférence à d'autres substances organiques qui réduisent leur point de fusion.

7. Procédé selon la revendication 1, **caractérisé en ce que** les inclusions du ou des composés organiques non polaires sont produites à partir de solutions ou de suspensions de principes actifs dans des solvants organiques non polaires.

8. Procédé selon la revendication 7, **caractérisé en ce que** des principes actifs non polaires, de préférence des produits végétaux, de manière particulièrement préférée, de l'huile de jojoba, de l'huile de monoï, de l'huile d'onagre, de l'huile d'avocat, du beurre de cacao, des extraits végétaux éthérés ou des extraits végétaux non polaires, des vitamines solubles dans les graisses, de préférence les vitamines A, D et E, ou des insecticides, de préférence des pyréthroïdes, tout particulièrement la perméthrine, ou des répulsifs, dans lequel la concentration en principe(s) actif(s) atteint de préférence 0,001 à 500 g et plus par kg de corps façonnés.

9. Corps façonné cellulosique fabriqué à partir du procédé Lyocell, comprenant une matrice cellulosique et des inclusions qui y sont dispersées, **caractérisé en ce que** les inclusions contiennent un ou plusieurs composés organiques non polaires stabilisés par un agent épaississant hydrophobe et **en ce que** le corps façonné contient un matériau barrière formé de particules stratifiées à l'échelle nanométrique.

10. Corps façonné cellulosique selon la revendication 9, **caractérisé en ce que** les composés organiques non polaires sont choisis dans le groupe comprenant les hydrocarbures, les cires, les cires d'abeille, les huiles, les acides gras, les esters d'acides gras, l'anhydride stéarique et les alcools à longue chaîne, qui présentent respectivement un point de fusion de moins de 100 °C.

11. Corps façonné cellulosique selon la revendication 9, **caractérisé en ce que** les inclusions contiennent un ou plusieurs principes actifs choisis dans le groupe comprenant des produits végétaux, de l'huile de jojoba, de l'huile de monoï, de l'huile d'onagre, de l'huile d'avocat, du beurre de cacao, des extraits végétaux éthérés, des extraits végétaux non polaires, des vitamines solubles dans les graisses, les vitamines A, D et E, les insecticides, les pyréthroïdes, tout particulièrement la perméthrine, et des répulsifs, dans lequel les principes actifs sont contenus de préférence en quantité allant jusqu'à 50 % en poids, par rapport au poids du corps façonné cellulosique.

12. Corps façonné cellulosique selon la revendication 9, **caractérisé en ce que** la fraction des composés organiques non polaires atteint plus de 10 % en poids, de préférence plus de 30 % en poids, mieux encore plus de 40 % en poids et/ou la fraction de l'agent épaississant hydrophobe contient 1 à 50 % en poids, respectivement, par rapport au poids de la cellulose.

13. Corps façonné cellulosique selon la revendication 9, **caractérisé en ce que** l'agent épaississant hydrophobe est constitué de particules à l'échelle nanométrique, de préférence formées d'acide silicique pyrogène hydrophobisé à l'échelle nanométrique.

14. Corps façonné cellulosique selon la revendication 9, **caractérisé en ce qu'**il contient un matériau barrière formé de particules stratifiées hydrophobisées à l'échelle nanométrique pour retenir les composés organiques non polaires et libérer de manière contrôlée les principes actifs, dans lequel la fraction du matériau barrière atteint de préférence 1 à 50 % en poids par rapport au poids de la cellulose.

15. Corps façonné cellulosique selon la revendication 14, **caractérisé en ce que** le matériau barrière est constitué de silicates stratifiés hydrophobisés à l'échelle nanométrique, de préférence de bentonite hydrophobisée à l'échelle nanométrique.

16. Corps façonné cellulosique selon la revendication 14, **caractérisé en ce que** le matériau barrière est dispersé dans la matrice cellulosique, dans lequel les inclusions sont entourées de préférence par une zone de densité plus élevée du matériau barrière.

17. Corps façonné cellulosique selon la revendication 9, **caractérisé en ce qu'**il s'agit d'une fibre et **en ce que**, selon un test effectué dans le cadre de la norme DIN EN 26330 de 1993, la perte d'un ou plusieurs composés organiques non polaires atteint, après 20 lavages, moins de 20 % en poids par rapport à la quantité des composés organiques respectifs contenue à l'origine dans la fibre.

18. Corps façonné cellulosique selon la revendication 9, **caractérisé en ce qu'**il présente dans une plage de température de 15 à 45 °C de préférence une chaleur spécifique latente de plus de 20 J/g, de préférence de plus de 30 J/g et, tout particulièrement, de plus de 50 J/g.

19. Corps façonné cellulosique selon la revendication 9, **caractérisé en ce qu'**il est fabriqué selon un procédé conforme à une ou plusieurs des revendications 1 à 8.

20. Utilisation de corps façonnés cellulosiques selon une ou plusieurs des revendications 9 à 19 dans des tissus textiles plats, éventuellement après mélange à d'autres fibres textiles, pour la fabrication de papiers spéciaux ou pour la fabrication de films, en particulier de films chargés de principes actifs.
